# EUROPEAN PATENT APPLICATION

(11) **EP 4 354 284 A1**
(43) Date of publication of application: **17.04.2024**
(21) Application number: 22804096.0
(22) Date of filing: 23.05.2022
(51) Int. Cl.: G06F 9/38, G06F 9/30

(54) **SCHEDULING METHOD, APPARATUS AND SYSTEM, AND COMPUTING DEVICE**

(30) Priority: 21.05.2021 CN 202110558600; 08.07.2021 CN 202110770860
(71) Applicant: Huawei Technologies Co., Ltd., Longgang Shenzhen, Guangdong 518129 (CN)
(72) Inventor: ZHOU, Yigang, Shenzhen, Guangdong 518129 (CN); LE, Yongnian, Shenzhen, Guangdong 518129 (CN); LI, Haicheng, Shenzhen, Guangdong 518129 (CN); WANG, Kebing, Shenzhen, Guangdong 518129 (CN)
(74) Representative: Huawei European IPR
(86) International application number: PCT/CN2022/094387
(87) International publication number: WO 2022/242777

(57) **Abstract**

This application provides a scheduling method. The method is performed by a computing device. The computing device includes a plurality of processors, a type of at least one instruction set of instruction sets supported by at least one of the plurality of processors is different from a type of an instruction set of instruction sets supported by another processor, and the scheduling method includes: obtaining a type of an instruction set of an application; selecting a target processor from the plurality of processors, where the type of the instruction set of the application is a subset of types of a plurality of instruction sets of instruction sets supported by the target processor; and allocating the application to the target processor for execution. This method can effectively support data processing of high-performance computing under a homogeneous multi-instruction set architecture.

## Description

This application claims priority to Chinese Patent Application No. 202110558600.X, filed with the China National Intellectual Property Administration on May 21, 2021 and entitled "DATA PROCESSING METHOD AND APPARATUS, AND COMPUTER DEVICE", and to Chinese Patent Application No. 202110770860.3, filed on July 8, 2021 and entitled "SCHEDULING METHOD, APPARATUS, AND SYSTEM, AND COMPUTING DEVICE", which are incorporated herein by reference in their entireties.

### TECHNICAL FIELD

This application relates to the computer field, and in particular, to a scheduling method, apparatus, and system, and a computing device.

### BACKGROUND

Processors of a conventional server are of a symmetric multi-processing (symmetric multi-processing, SMP) architecture or a non-uniform memory architecture (non-uniform memory architecture, NUMA), in other words, instruction set architectures and micro-architectures of the plurality of processors on the server are totally the same. By sampling performance of a specific task, an operating system determines proper computing power needed for the task, and schedules the task to a proper processor core for execution. Integrating a floating-point accelerator into a general-purpose computing processor and driving the floating-point accelerator by using a specific acceleration instruction is a development trend of a general-purpose processor architecture in the diversified computing era. Because this type of processor supports high-performance floating-point acceleration, a micro-architecture and an instruction set architecture of this type of processor are slightly different from those of a common general-purpose processor. When a general-purpose processor and a processor with floating-point acceleration form a computing system of a homogeneous multi-instruction set architecture in a server through an interconnection bus, an instruction exception that cannot be identified occurs when a conventional scheduler schedules a task with a floating-point acceleration instruction to a general-purpose processor core, and the task exits abnormally. In an existing processing method, a user invokes, by using a programming framework, an interface provided by the programming framework, to send an application to a processor specified by the user for execution. The user needs to have some knowledge of a type of an instruction set supported by the processor, and programming is complex. Therefore, how to provide a high-performance task scheduling method under a homogeneous multi-instruction set architecture becomes a problem that urgently needs to be resolved.

### SUMMARY

This application provides a scheduling method, apparatus, and system, and a computing device, to support data processing of high-performance computing in a homogeneous multi-instruction set architecture.

According to a first aspect, a scheduling method is provided. The method is performed by a computing device. The computing device includes a plurality of processors, and a type of at least one instruction set of instruction sets supported by at least one of the plurality of processors is different from a type of an instruction set of instruction sets supported by another processor. The scheduling method includes: first obtaining a type of an instruction set of an application; selecting a target processor from the plurality of processors, where the type of the instruction set of the application is a subset of types of a plurality of instruction sets of instruction sets supported by the target processor; and then allocating the application to the target processor for execution. According to the foregoing method, in the new scheduling method, the type of the instruction set of the application and the instruction sets supported by the processor are identified before scheduling, so that an operating system has a capability of scheduling a hybrid system having processors supporting different sets of instruction sets.

In a possible implementation, a method for selecting the target processor from the plurality of processors may be specifically: selecting the target processor from the plurality of processors based on the type of the instruction set of the application, where the type of the instruction set of the application is the subset of the types of the plurality of instruction sets in the instruction sets supported by the target processor. According to the foregoing method, it can be ensured that the application is scheduled to the processor that supports the type of the instruction set of the application, so that an exception in execution of the application is avoided.

In another possible implementation, the target processor belongs to a target scheduling domain, instruction sets supported by the target scheduling domain is the same as the instruction sets supported by the target processor, and before the target processor is selected, the target scheduling domain is selected from a plurality of scheduling domains, where the type of the instruction set of the application is a subset of types of a plurality of instruction sets in the instruction sets supported by the target scheduling domain. According to the foregoing method, the target processor may be selected by using the scheduling domain, to improve scheduling efficiency.

In another possible implementation, the target scheduling domain includes only the target processor; or includes the target processor and another processor, and instruction sets supported by the another processor is the same as the instruction sets supported by the target processor. According to the foregoing method, processors that support a same instruction sets may be managed as a scheduling domain in a unified manner, to improve the scheduling efficiency.

In another possible implementation, the application includes at least one task, and the scheduling method further includes: writing a type of an instruction set of the task into a task control block of the task, where the type of the instruction set of the task is the same as the type of the instruction set of the application. The obtaining a type of an instruction set of an application specifically includes: obtaining the type of the instruction set of the task from the task control block. According to the foregoing method, the application may be divided into a plurality of tasks, and each task is allocated to a different processor for execution, to improve execution efficiency of the application.

In another possible implementation, the allocating the application to the target processor for execution may be specifically: allocating the task to the target processor for execution.

In another possible implementation, the target processor includes at least one processing unit, and the allocating the task to the target processor for execution specifically includes: when the target processor supports simultaneous multithreading processing, allocating the task to one processing unit of the target processor for execution. According to the foregoing method, a simultaneous multithreading processing technology of the processor may be used for simultaneously executing the plurality of tasks on the processor, to improve the execution efficiency of the application.

In another possible implementation, the target processor includes at least one processor core, and the allocating the task to the target processor for execution specifically includes: when the target processor does not support simultaneous multithreading processing, allocating the task to one processor core of the target processor. According to the foregoing method, a multi-core technology of the processor may be used for simultaneously executing the plurality of tasks on the processor, to improve the execution efficiency of the application.

In another possible implementation, when the processor fails to execute the task, an identifier of the target scheduling domain is stored in a first storage unit of the task control block of the task, where the identifier stored in the first storage unit indicates that the processor included in the target scheduling domain is not allocated to execute the application. According to the foregoing method, a task of a same application can be prevented from being scheduled again to a processor that does not support execution, to increase a probability of successful execution of the application.

In another possible implementation, when the processor successfully executes the task, the identifier of the target scheduling domain is stored in a second storage unit of the task control block of the task, where the identifier stored in the second storage unit indicates that the processor included in the target scheduling domain can be allocated to execute the application. According to the foregoing method, duration for a scheduler to determine that the scheduling domain supports execution of the task can be reduced, and the execution efficiency of the application can be improved.

In another possible implementation, the obtaining a type of an instruction set of a to-be-executed application specifically includes: when the application is compilable, obtaining the type of the instruction set of the application by using a compilation option; or when the application is not compilable, obtaining the type of the instruction set of the application by using an abnormal instruction. The type of the instruction set of the application may be obtained in the two manners. According to the scheduling method provided in this application, a to-be-executed new application can be scheduled, and an old application that already has an executable file can be further scheduled.

In another possible implementation, the obtaining the type of the instruction set of the application by using a compilation option specifically includes: directly obtaining, by using the compilation option, the type, specified by a user, of the instruction set for executing the application; or first obtaining, by using the compilation option, a type, specified by a user, of a processor for executing the application, and then determining the type of the instruction set of the application based on a relationship between the type of the processor and the type of the instruction set.

In another possible implementation, after the type of the instruction set of the application is obtained by using the compilation option, the application may be further compiled into a binary file, where the binary file includes the type of the instruction set of the application.

In another possible implementation, after the type of the instruction set of the application is obtained by using the abnormal instruction, binary code of the abnormal instruction may be further parsed to obtain a type of an instruction set to which the abnormal instruction belongs, and then the type of the instruction set of the application is set to the type of the abnormal instruction set.

In another possible implementation, the task is a process generated when the device executes the application.

In another possible implementation, the task is a thread generated when the device executes the application.

According to a second aspect, this application provides a computing device, including a plurality of processors, where a type of at least one instruction set of instruction sets supported by at least one of the plurality of processors is different from a type of an instruction set of instruction sets supported by another processor. A main processor in the plurality of processors is configured to implement a function of the operation step of the scheduling method in any one of the first aspect or the possible implementations of the first aspect.

According to a third aspect, a scheduling apparatus is provided. The scheduling apparatus includes each module configured to perform the scheduling method in any one of the first aspect or the possible implementations of the first aspect. The scheduling apparatus is deployed in a computing device, where the computing device includes a plurality of processors, and a type of at least one instruction set of instruction sets supported by at least one of the plurality of processors is different from a type of an instruction set of instruction sets supported by another processor.

According to a fourth aspect, this application provides a scheduling system, including a scheduling apparatus configured to perform the scheduling method in any one of the first aspect or the possible implementations of the first aspect and a plurality of processors, where a type of at least one instruction set of instruction sets supported by at least one of the plurality of processors is different from a type of an instruction set of instruction sets supported by another processor. The scheduling apparatus and the plurality of processors may be located on different computing devices, and the at least one of the plurality of processors and the another processor may also be located on different computing devices.

According to a fifth aspect, a computer-readable storage medium is provided. The computer-readable storage medium stores instructions. When the instructions are run on a computer, the computer is enabled to perform the operation step of the method in any one of the first aspect or the possible implementations of the first aspect.

According to a sixth aspect, a computer program product including instructions is provided. When the computer program product runs on a computer, the computer is enabled to perform the operation step of the method in any one of the first aspect or the possible implementations of the first aspect.

In this application, based on the implementations according to the foregoing aspects, the implementations may further be combined to provide more implementations.

### BRIEF DESCRIPTION OF DRAWINGS

FIG. 1 is a schematic diagram of a structure of a device 100 according to an embodiment of this application;
FIG. 2 is a schematic diagram of an operating system 13 according to this application;
FIG. 3 is a schematic diagram of a scheduling domain according to this application;
FIG. 4 is a schematic diagram of a structure of two levels of scheduling domains stored in a memory according to this application;
FIG. 5 is a schematic flowchart of a scheduling method according to an embodiment of this application;
FIG. 6 is a schematic diagram of a task control block according to an embodiment of this application;
FIG. 7 is a schematic flowchart of another scheduling method according to an embodiment of this application;
FIG. 8 shows a method for setting a "blacklist" according to this application;
FIG. 9 shows a method for setting a "whitelist" according to this application;
FIG. 10 is a schematic diagram of another task control block according to this application; and
FIG. 11 is a schematic diagram of a scheduling apparatus 1100 according to an embodiment of this application.

### DESCRIPTION OF EMBODIMENTS

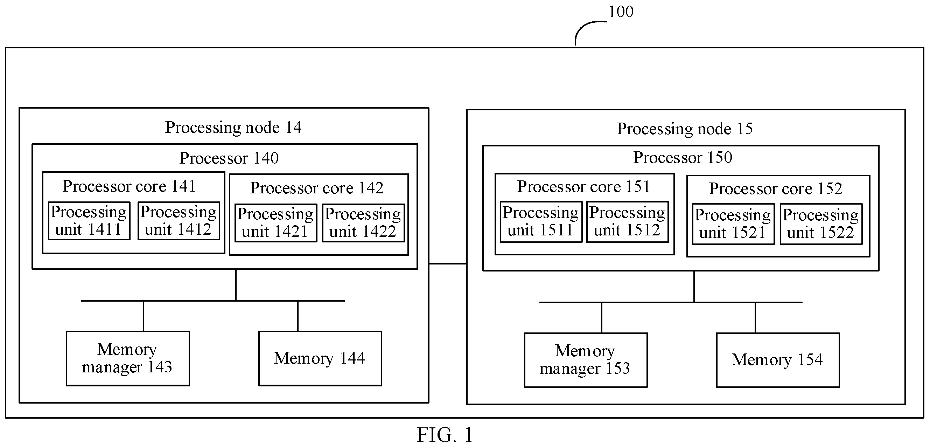

The following describes the technical solutions in embodiments of this application with reference to the accompanying drawings. FIG. 1 is a schematic diagram of a structure of a device 100 according to an embodiment of this application. The device 100 may be any computing device (for example, a server) having at least two processors. A device having a plurality of processors may use either a symmetric multi-processing (symmetric multi-processing, SMP) architecture or a non-uniform memory access (None-Uniform Memory Access, NUMA) architecture. For ease of description, the following embodiments of this application are described by using an example in which the device 100 uses a NUMA structure. It should be noted that a task scheduling method provided in this application is further applicable to a device using an SMP structure and a device having another multi-processor structure.

The device 100 includes a processing node 14 and a processing node 15. The plurality of processing nodes are connected to a memory 16 through a bus. The bus may be a data bus, or may be a power bus, a control bus, a status signal bus, or the like. The bus may alternatively be another type of bus, for example, Quick Path Interconnect (quick path interconnect, QPI), for connecting components in the computing device. It should be noted that a quantity of processing nodes in the device 100 does not constitute a limitation on this application. In FIG. 1, only an example in which the device 100 includes two processing nodes is used for description.

Each processing node in the device 100 has a structure of a single processing node shown in FIG. 1. The following uses one processing node (the processing node 14) as an example to describe components in each processing node and a connection manner of the components. The processing node 14 includes a processor 140, a memory 144, and a memory manager 143. The processor 140, the memory 144, and the memory manager 143 are interconnected through an on-chip bus.

The processor 140 is a chip of a physical central processing unit (central processing unit, CPU). A processor on a processing node may quickly access a local memory of the node through an on-chip bus, or may access a memory of another node through high-speed interconnect. For example, the processor 141 of the processing node 14 may access the memory 144 of the processing node 14, or may access a memory 154 of the processing node 15. In comparison with accessing the memory of the current processing node by the processor, accessing a memory of another processing node by the processor takes more time. Therefore, for a NUMA system, a memory in a same processing node as a processor needs to ideally include information most associated with the processor. In some embodiments, the processor 140 may further include a plurality of cores (cores), for example, a processor core 141 and a processor core 142. These cores are integrated on a chip of the processor 140. Each processor core may have an independent L1 cache, and different processor cores in a same processor may share an L2 cache. In some embodiments, in each processor core, a technology such as simultaneous multithreading (simultaneous multithreading) may be used for enabling one processor core to concurrently execute a plurality of threads or processes. A hardware unit that processes each thread or process is logically a CPU, and may also be referred to as a processing unit, for example, a processing unit 1411 and a processing unit 1412. Processing units of a same processor share all resources of the processors, including an L1 cache and a logical operation unit.

The memory 144 or the memory 154 is an internal memory that directly exchanges data with the processing unit. The memory 144 or the memory 154 can read and write data at a high speed at any time, and serves as a temporary data memory of an operating system or another running program. The memory 144 or the memory 154 includes at least two types of memories, for example, may be a random access memory, or may be a read-only memory (Read-Only Memory, ROM). For example, the random access memory is a dynamic random access memory (Dynamic Random Access Memory, DRAM) or a storage class memory (Storage Class Memory, SCM). The DRAM is a semiconductor memory, and is a volatile memory (volatile memory) device like most random access memories (Random Access Memories, RAMs). The SCM uses a composite storage technology that combines both a conventional storage apparatus feature and a memory feature. The storage class memory can provide a higher read/write speed than a hard disk, but has a slower access speed than the DRAM and lower costs than the DRAM. However, the DRAM and the SCM are merely examples for description in this embodiment. The memory may further include another random access memory, for example, a static random access memory (Static Random Access Memory, SRAM). For example, the read-only memory may be a programmable read-only memory (Programmable Read-Only Memory, PROM) or an erasable programmable read-only memory (Erasable Programmable Read-Only Memory, EPROM). In addition, the memory 144 or the memory 154 may alternatively be a dual in-line memory module (Dual In-line Memory Module, DIMM for short), to be specific, a module including a dynamic random access memory (DRAM); or may be a solid-state drive (Solid-State Drive, SSD). In an actual application, a plurality of memories and different types of memories may be configured in the NUMA system. A quantity and the types of the memories are not limited in this embodiment. In addition, the memory may be configured to have a power failure protection function. The power failure protection function means that data stored in the memory is not lost even when the system is powered on again after a power failure. A memory with a power failure protection function is referred to as a nonvolatile memory.

The memory manager is configured to manage and plan data transmission from the memory to the processing unit, and may be an independent chip, or may be integrated into a chip of the processor.

The device 100 supports mixing of processors of different instruction set versions to form a homogeneous multi-instruction set architecture, and may include the following two scenarios.

Scenario 1: A general-purpose processor and a general-purpose instruction heterogeneous processor are mixed.

The general-purpose instruction heterogeneous processor means that an accelerator including a floating-point accelerator is integrated into a general-purpose processor, and a specific acceleration instruction is added to drive the accelerator, so that the accelerator can reuse various resources on the processor, and support requirements of floating-point number computing with different precision. For example, the processor 140 in FIG. 1 may be a general-purpose processor, and the processor 150 may be a general-purpose processor integrating a floating-point accelerator.

Scenario 2: Processors produced at different time points are mixed.

As a chip manufacturing process progresses, hardware circuits of processors produced at different time points have different complexity degrees. Therefore, supported instruction set versions are also slightly different. For example, the processor 140 in FIG. 1 may be a general-purpose processor of version 9, and the processor 150 may be a general-purpose processor of version 8.6.

In the device 100, an operating system 13 is configured to: run an application, convert a task generated by the application into an instruction, and allocate the instruction to a processor that can successfully execute the task for execution. In an implementation, the operating system 13 may be run on a main processor of the device 100. After receiving a request for running the application, another processor sends the request to the main processor. The operating system 13 converts the task generated by the application into the instruction and allocates the instruction to the processor that can successfully execute the task for execution. The main processor may be pre-specified by a user in the plurality of processors of the device 100. A specified manner is not limited in this application. For example, the main processor may be the processor 140 or the processor 150. In another implementation, the operating system 13 may alternatively be run on the plurality of processors of the device 100. For example, the operating system 13 is run on both the processor 140 and the processor 150. After one processor receives a request for running the application, the operating system 13 on the processor converts the task generated by the application into the instruction and allocates the instruction to the processor that can successfully execute the task for execution. In this case, the processor that executes the operating system 13 may be referred to as a main processor.

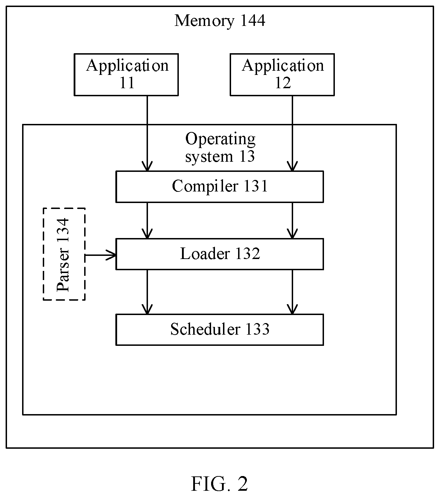

FIG. 2 is a schematic diagram of an operating system 13 according to this application. For example, the operating system is stored in a memory 144. As shown in FIG. 2, the operating system 13 includes a compiler 131, a loader 132, and a scheduler 133. The compiler 131 is configured to compile code of an application into a binary file that can be executed by a processor. When the binary file is executed, the loader 132 creates a corresponding process or thread for loading an instruction of the binary file. In one aspect, a new process may be created by loading each binary file once. When a process is created, the loader 132 further allocates a segment of memory space to the process for storing a context related to the process, where the context includes a process identifier, scheduling information of the process, control information of the process, an address of a next to-be-executed instruction, and the like. The segment of memory space may also be referred to as a process control block. In another aspect, the loader 132 may further create a plurality of threads for one process, to execute a plurality of subtasks in the process, and the plurality of threads may share software and hardware resources of the process. When a thread is created, the loader 132 allocates, in space occupied by a process control block, a segment of memory space to the thread for storing a context related to the thread, where the context includes a thread identifier, scheduling information of the thread, control information of the thread, an address of a next to-be-executed instruction, and the like. The memory space allocated to the thread may also be referred to as a thread control block. Finally, the scheduler 133 schedules the process or thread of the application to different processing units for execution. For ease of description, in the following embodiments, a process or a thread is collectively referred to as a task, and a process control block or a thread control block is collectively referred to as a task control block.

The operating system 13 may further include a parser 134, which may be configured to parse binary code of the instruction to obtain a type of an instruction set of the instruction.

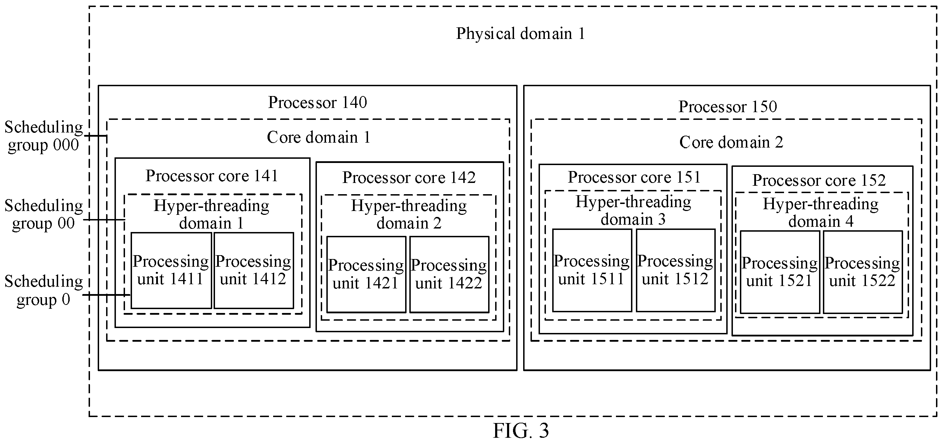

When the scheduler 133 schedules a task, a multi-level scheduling domain management method may be used, and each scheduling domain includes one or more pieces of hardware. For example, as shown in FIG. 3, the hardware may be a processor, and a scheduling domain including one or more processors may be referred to as a physical domain (PHY domain); the hardware may be a processor core, and a scheduling domain including one or more processor cores may be referred to as a core domain (MC_domain); or the hardware may be a processor unit, and a scheduling domain including one or more processing units may be referred to as a hyper-threading domain (SMT domain). The scheduling domain represents a range in which the scheduler 133 executes a scheduling policy, and the scheduler 133 may execute different scheduling policies in the scheduling domains. The hardware in each scheduling domain may be further divided into one or more scheduling groups (CPU group). Each scheduling group may be considered as an independent execution unit, and the scheduler executes a scheduling policy between different scheduling groups in the scheduling domain. For example, as shown in FIG. 3, when the scheduling domain is a physical domain, each processor may be used as a scheduling group; when the scheduling domain is a core domain, each processor core may be used as a scheduling group; or when the scheduling domain is a hyper-threading domain, each processing unit may be used as a group. When the operating system 13 is started, the scheduler 133 may establish scheduling domains at different levels, and establish a corresponding scheduling group on each layer of scheduling domain.

For example, the structure of the processor of the device 100 in FIG. 1 is used as an example. FIG. 3 is a schematic diagram of a scheduling domain according to this application. As shown in FIG. 3, the scheduling domain may be classified into a hyper-threading domain, a core domain, and a physical domain. Specifically, the hyper-threading domain is a bottom-layer scheduling domain, and each processor core may be considered as one hyper-threading domain. For example, the processor core 141 is a hyper-threading domain 1. Each hyper-threading domain is associated with two processing units. For example, the hyper-threading domain 1 is associated with the processing unit 1411 and the processing unit 1412. Each processing unit is used as one scheduling group in the hyper-threading domain. For example, a scheduling group 0 is the processing unit 1411. A higher-level scheduling domain is the core domain, and each processor may be considered as one core domain. For example, the processor 140 is a core domain 1. Each core domain is associated with two processor cores. For example, the core domain 1 is associated with the processor core 141 and the processor core 142. Each processor core is used as one scheduling group in the core domain. For example, a scheduling group 00 is the processor core 141. The higher-level physical domain includes the plurality of processors in the system, and each physical domain is associated with a plurality of processors. For example, a physical domain 1 is associated with the processor 140 and a processor 1250. In the physical domain, each processor is used as one scheduling group. For example, a scheduling group 000 is the processor 140.

Optionally, when a multi-core processor does not support simultaneous multithreading processing, a scheduling domain may be classified into two levels: a physical domain and a core domain.

Optionally, when a processor has only one core and supports simultaneous multithreading processing, a scheduling domain may be classified into two levels: a physical domain and a hyper-threading domain.

Optionally, when a processor has only one core and does not support simultaneous multithreading processing, a scheduling domain is a physical domain.

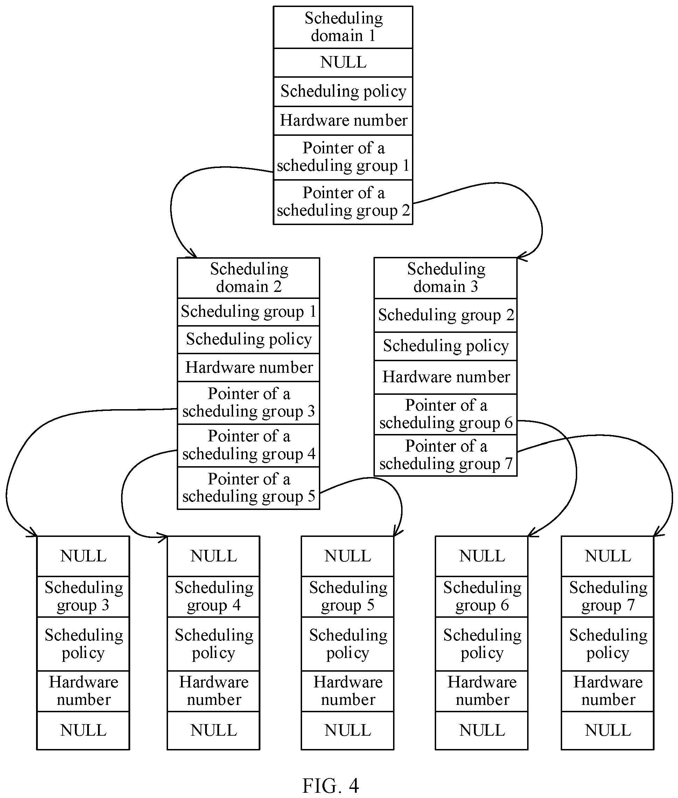

The scheduler 133 may store a topological relationship diagram of the scheduling domain in the memory in a form of a structure. FIG. 4 is a schematic diagram of a structure of two levels of scheduling domains stored in a memory according to this application. As shown in FIG. 4, the scheduling domains present a tree topology structure, the scheduling domains at different levels are connected together by using pointers, and a lower-level scheduling domain may be considered as a scheduling group in a higher-level scheduling domain. For example, a scheduling domain 2 and a scheduling domain 3 are respectively a scheduling group 1 and a scheduling group 2 of a scheduling domain 1. The scheduler may first execute a scheduling policy of the scheduling domain 1 between the scheduling group 1 and the scheduling group 2 in the scheduling domain 1. After a scheduling group, for example, the scheduling group 1, is selected, the scheduler allocates a task to the scheduling domain 2, and then executes a scheduling policy of the scheduling domain 2 among scheduling groups 3 to 5 of the scheduling domain 2. After a scheduling group, for example, the scheduling group 3, is selected. The scheduler allocates a task to the scheduling group 3. A structure of a scheduling domain includes a number of the scheduling domain (which may also be referred to as a scheduling domain identifier, and is NULL when the structure is only one scheduling group), a number of the scheduling group (which may also be referred to as a scheduling group identifier, and is NULL when the structure is not a scheduling group of another scheduling domain), a scheduling policy, a number of hardware included in the scheduling domain, and a pointer of the scheduling group (which is NULL when the structure is only one scheduling group). The scheduling policy may be set by the user, and the user may set different scheduling policies for scheduling domains at different levels. A setting method is not limited in this application.

When a plurality of scheduling domains in a device form a computing system of a homogeneous multi-instruction set architecture, according to the task scheduling method provided in this application, the scheduler 133 may identify different instruction sets in a task of an application, and schedule the task to a processing unit that can execute the instruction set, to avoid abnormal exit of the task caused by an unidentifiable instruction exception generated by the processing unit.

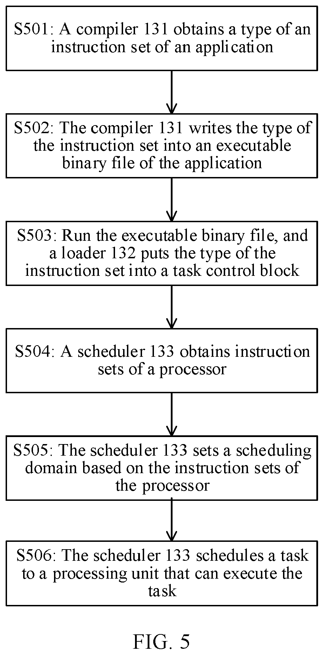

The following describes a data processing method according to embodiments of this application with reference to FIG. 5 to FIG. 10. FIG. 5 is a schematic flowchart of a scheduling method according to an embodiment of this application. The method may be performed by the operating system 13 shown in FIG. 2. Specifically, the method may be performed by a main processor that runs the operating system 13. The main processor may be a processor specified by a user, or may be a processor that runs the operating system 13, for example, the processor 140 or the processor 150 in FIG. 1. As shown in FIG. 5, the method specifically includes the following steps.

S501: A compiler 131 obtains a type of an instruction set of an application.

Before the application is executed, code needs to be compiled into an executable binary file, and then a scheduler schedules the executable binary file to the processor for execution. When compiling the code of the application, the compiler 131 may obtain the type of the instruction set of the application by using a compilation option in the following two manners.

Manner 1: A user specifies, in the compilation option, a model of the processor that executes the application.

The user may specify, by using the compilation option, the model of the processor that executes the application. For example:
-march=cpu-type, where
the right side of the equal sign indicates the model of the processor that executes the application, and the application may be compiled into the binary file executed on the processor of this type.

After obtaining the model of the processor, the compiler 131 may determine, based on the model of the processor, instruction sets supported by the processor, where the instruction sets includes types of all instruction sets supported by the processor. A relationship between a model of a processor and instruction sets supported by the processor may be preset in a device in a form of a table. For example, Table 1 is a list of relationships between models of processors and sets of instruction sets provided in this embodiment of this application. The table records a model (which may also be referred to as an identifier) of each processor and instruction sets supported by the processor of the model.

**Table 1 Models of processors and sets of instruction sets**

| Model | Instruction sets |
|---|---|
| Model 1 | MMX, SSE, SSE2, SSE3, and SSSE3 |
| Model 2 | MMX, SSE, SSE2, SSE3, SSSE3, SSE4.1, SSE4.2, and POPCNT |
| Model 3 | MOVBE, MMX, SSE, SSE2, SSE3, SSSE3, SSE4.1, SSE4.2, POPCNT, AVX, AVX2, AES, PCLMUL, FSGSBASE, RDRND, FMA, BMI, BMI2, F16C, RDSEED, ADCX, and PREFETCHW |
| Model 4 | MOVBE, MMX, SSE, SSE2, SSE3, SSSE3, SSE4.1, SSE4.2, POPCNT, AVX, AVX2, AES, PCLMUL, FSGSBASE, RDRND, FMA, BMI, BMI2, F16C, RDSEED, ADCX, PREFETCHW, CLFLUSHOPT, XSAVEC, and XSAVES |

Manner 2: A user directly specifies, in the compilation option, the type of the instruction set for executing the application.

The user may directly specify, by using a compilation option "-m-xxx", the type of the instruction set for executing the application, indicating that the application may be compiled into the binary file executed on the processor supporting the type of the instruction set. For example:
- mmmx -msse, where
- mmmx -msse indicates that the type of the instruction set compiled for the application is MMX or SSE.

S502: The compiler 131 writes the type of the instruction set into the executable binary file of the application.

In a compilation process, the compiler 131 writes the type of the instruction set into the executable binary file generated through compilation. For example, the compiler 131 may write the type of the instruction set into a .comment field of the executable binary file.

S503: Run the executable binary file, and a loader 132 puts the type of the instruction set into a task control block.

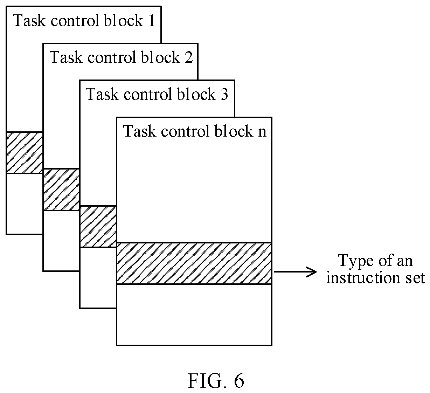

When the binary file is executed, the loader 132 creates a corresponding task according to an instruction of the binary file, and creates the corresponding task control block in the memory for storing a context related to a process. The loader 132 further stores the type of the instruction set in task control blocks of all tasks corresponding to the binary file. FIG. 6 is a schematic diagram of a task control block according to this application. As shown in FIG. 6, a plurality of tasks are generated when an application is run, each task corresponds to one task control block, and one piece of space is allocated in each task control block for storing a type of an instruction set.

S504: A scheduler 133 obtains the instruction sets of the processor.

When the operating system is started, the scheduler 133 may obtaof instruction sets supported by a processor deployed on the device. For example, the scheduler 133 may invoke a cpuinfo instruction and read a modelnade field, to obtain a model of each processor, and then obtain, based on the list of relationships between models of processors and sets of instruction sets, a type of an instruction set supported by each processor. For another example, the scheduler 133 may alternatively invoke a cpuinfo instruction and read a flag field, to directly obtain a type of an instruction set supported by each processor.

S505: The scheduler 133 sets a scheduling domain based on the instruction sets of the processor.

The scheduler 133 sets, based on the instruction sets of the processor, processors having the same instruction sets as a physical domain, and writes the types of all the instruction sets in the instruction sets into a structure of the physical domain in a form of instruction sets.

S506: The scheduler 133 schedules the task to a processing unit that can execute the task.

When clock interruption triggers one time of task scheduling in the physical domain, the scheduler 133 determines whether the instruction sets in the physical domain includes types of all instruction sets in the task control block of the task that needs to be scheduled. A scheduling group, namely, a processor, is selected, according to a scheduling policy of the physical domain, from the physical domain in which the task can be executed. Then, the scheduler 133 may select a scheduling group, namely, a processor core, from a core domain according to a scheduling policy of the core domain, and then select a scheduling group, namely, a processing unit, from a hyper-threading domain according to a scheduling policy of the hyper-threading domain to execute the task.

Optionally, when a multi-core processor does not support simultaneous multithreading processing, the scheduler 133 may select a scheduling group, namely, a processor core from the core domain according to the scheduling policy of the core domain to execute the task.

Optionally, when the processor has only one core and supports simultaneous multithreading processing, the scheduler 133 may directly select a scheduling group, namely, a processing unit from the hyper-threading domain according to the scheduling policy of the hyper-threading domain to execute the task.

Optionally, when the processor has only one core and does not support simultaneous multithreading processing, the scheduler 133 directly selects the scheduling group, namely, the processor to execute the task.

Optionally, when no physical domain can execute the task, the scheduler 133 directly reports an error, and stops executing the application.

The task scheduling method provided in this application may be applied to a homogeneous multi-instruction set structure. A compiler and a scheduler are cooperated, so that a multi-processor system including scheduling domains supporting different instruction set versions can be flexibly scheduled in a same operating system.

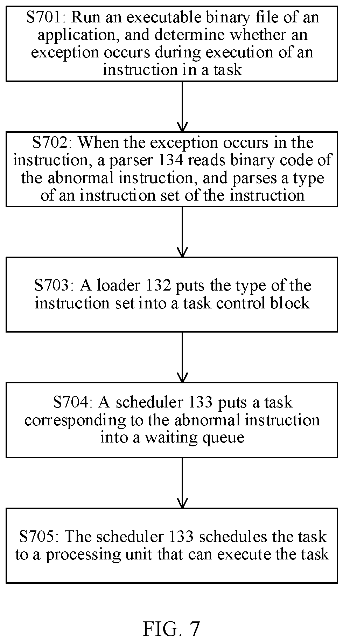

For a large quantity of existing executable binary files and dynamic link libraries, because they is not recompiled by using a compiler, a type of an instruction set is not written into an executable binary file of an application. The following method may be used for task scheduling. FIG. 7 is another scheduling method according to this application. Similar to FIG. 5, the method may be performed by the operating system 13 shown in FIG. 2. Specifically, the method may be performed by a main processor that runs the operating system 13. The main processor may be a processor specified by a user, or may be a processor that runs the operating system 13, for example, the processor 140 or the processor 150 in FIG. 1. As shown in FIG. 7, the method specifically includes the following steps.

S701: Run an executable binary file of an application, and determine whether an exception occurs during execution of an instruction in a task.

S702: When the exception occurs in the instruction, a parser 134 reads binary code of the abnormal instruction, and parses a type of an instruction set of the instruction.

S703: Similar to S403, a loader 132 puts the type of the instruction set into a task control block.

S704: A scheduler 133 puts a task corresponding to the abnormal instruction into a waiting queue.

S705: The scheduler 133 schedules the task to a processing unit that can execute the task.

Specifically, similar to S504 to S506, the scheduler 133 sets instruction sets of a scheduling domain, and schedules the task to the processing unit that can execute the task.

According to the foregoing method, a type of an instruction set of an application may be identified by dynamically identifying an abnormal instruction, to resolve a problem of repeated errors because a task of an old application or a dynamic link library is scheduled to an inappropriate processor.

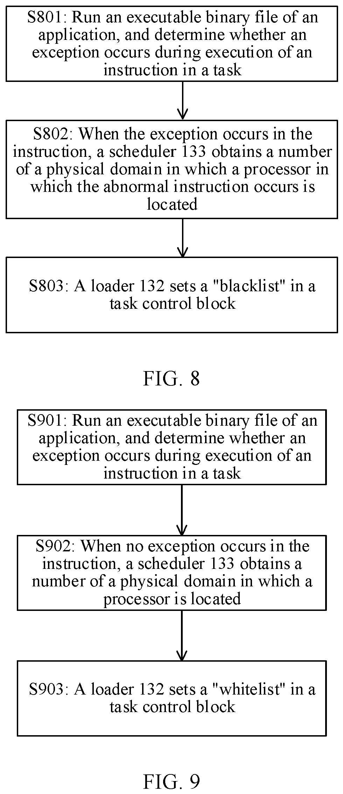

To reduce duration for a scheduler to determine whether types of instruction sets are the same and improve accuracy of scheduling performed by the scheduler, a "blacklist" or a "whitelist" may be further added to a task control block of a task, where the "blacklist" is used for storing a scheduling domain associated with a processor that encounters an exception during execution of the task. The "whitelist" is used for storing a scheduling domain associated with a processor that successfully executes the task. FIG. 8 shows a method for setting a "blacklist" according to this application. The method may be performed by the operating system 13 shown in FIG. 2. Specifically, the method may be performed by a main processor that runs the operating system 13. The main processor may be a processor specified by a user, or may be a processor that runs the operating system 13, for example, the processor 140 or the processor 150 in FIG. 1. As shown in FIG. 8, the method may be performed after step S506 in the method shown in FIG. 5, or may be performed after step S702 in the method shown in FIG. 7. The method is specifically as follows:

S801: Run the executable binary file of the application, and determine whether an exception occurs during execution of the instruction in the task.

S802: When the exception occurs in the instruction, the scheduler 133 obtains a number of a physical domain in which the processor in which the abnormal instruction occurs is located.

S803: The loader 132 sets a "blacklist" in the task control block.

A storage area is allocated in the task control block for storing the scheduling domain "blacklist". For ease of description, the storage area may also be referred to as a first storage unit. The loader 132 stores the number of the physical domain in first storage units of the task control blocks of all the tasks of the application.

After the "blacklist" is added, during next scheduling, the scheduler 133 does not schedule the task to the scheduling domain corresponding to the number stored in the "blacklist". Optionally, when the "blacklist" of the task includes all physical domains on the device 100, it indicates that all the processors cannot support the instruction for executing the task, and the scheduler 133 may directly report an error and stop executing the application.

According to the foregoing method, a task of a same application can be prevented from being scheduled again to a processor that does not support execution, to increase a probability of successful execution of the application.

FIG. 9 shows a method for setting a "whitelist" according to this application. The method may be performed by the operating system 13 shown in FIG. 2. Specifically, the method may be performed by a main processor that runs the operating system 13. The main processor may be a processor specified by a user, or may be a processor that runs the operating system 13, for example, the processor 140 or the processor 150 in FIG. 1. As shown in FIG. 8, the method may be performed after step S506 in the method shown in FIG. 5. The method is specifically as follows:

S901: Run the executable binary file of the application, and determine whether an exception occurs during execution of the instruction in the task.

S902: When no exception occurs in the instruction, the scheduler 133 obtains a number of a physical domain in which the processor is located.

S903: The loader 132 sets a "whitelist" in the task control block.

A storage area is allocated in the task control block for storing the scheduling domain "whitelist". For ease of description, the storage area may also be referred to as a second storage unit. The loader 132 stores the number of the physical domain in second storage units of the task control blocks of all the tasks of the application.

After the "whitelist" is added, during next scheduling, the scheduler 133 can directly schedule the task to the scheduling domain corresponding to the number stored in the "whitelist".

According to the foregoing method, duration for the scheduler to determine whether the scheduling domain supports the instruction set required for executing the task can be reduced, and execution efficiency of the application can be improved.

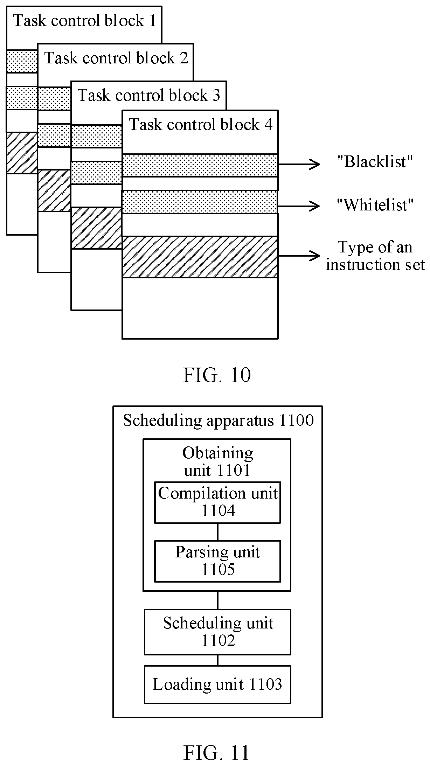

It should be noted that either of the "blacklist" and the "whitelist" may be added to the task control block of the task, or the "blacklist" and the "whitelist" may be added to the task control block of the task. FIG. 10 is a schematic diagram of a task control block to which a "blacklist" and a "whitelist" are added according to this application.

It should be noted that, for brief description, the foregoing method embodiments are represented as a series of actions. However, a person skilled in the art should know that this application is not limited to the described order of the actions. In addition, a person skilled in the art should also know that all the embodiments described in this specification are preferred embodiments, and the related actions are not necessarily mandatory to this application.

Another appropriate step combination that can be figured out by a person skilled in the art based on the content described above also falls within the protection scope of this application. In addition, a person skilled in the art should also appreciate that all embodiments described in this specification are preferred embodiments, and the related actions are not necessarily mandatory to this application.

With reference to FIG. 5 to FIG. 10, the task scheduling method provided in embodiments of this application is described above in detail. With reference to FIG. 11, a task scheduling apparatus according to an embodiment of this application is described below.

FIG. 11 is a schematic diagram of a scheduling apparatus 1100 according to an embodiment of this application. The scheduling apparatus 1100 includes an obtaining unit 1101 and a scheduling unit 1102. The scheduling apparatus 1100 is used for functions of the operating system 13 shown in FIG. 2.

The obtaining unit 1101 is configured to obtain a type of an instruction set of an application. For a specific implementation, refer to step S501 in FIG. 5. Details are not described herein again. In a product implementation process, the obtaining unit 1101 may be the compiler 131 shown in FIG. 2, or may be another compiler. A form of the obtaining unit 1101 is not limited in this embodiment.

The scheduling unit 1102 is configured to select a target processor from a plurality of processors of a computing device, where a type of at least one instruction set of instruction sets supported by at least one of the plurality of processors is different from a type of an instruction set of instruction sets supported by another processor, and the type of the instruction set of the application is a subset of types of a plurality of instruction sets of instruction sets supported by the target processor. The scheduling unit 1102 is further configured to allocate the application to the target processor for execution. For a specific implementation of the scheduling unit 1102, refer to steps S504 to S506 in FIG. 5. Details are not described herein again. In a product implementation process, the obtaining unit 1101 may be the scheduler 133 shown in FIG. 2, or may be another scheduler. A form of the scheduling unit 1102 is not limited in this embodiment.

Optionally, the scheduling unit 1102 is further configured to select the target processor from the plurality of processors based on the type of the instruction set of the application.

Optionally, before selecting the target processor, the scheduling unit 1101 is further configured to select the target scheduling domain from a plurality of scheduling domains, where the type of the instruction set of the application is a subset of types of a plurality of instruction sets in the instruction sets supported by the target scheduling domain. The target processor belongs to the target scheduling domain, and the instruction sets supported by the target scheduling domain is the same as the instruction sets supported by the target processor.

Optionally, the target scheduling domain includes only the target processor; or the target scheduling domain includes the target processor and another processor, and instruction sets supported by the another processor is the same as the instruction sets supported by the target processor.

Optionally, the scheduling apparatus 1100 further includes a loading unit 1103. The loading unit 1103 is configured to write a type of an instruction set of the task into a task control block of the task, where the type of the instruction set of the task is the same as the type of the instruction set of the application. The obtaining unit 1101 is further configured to obtain the type of the instruction set of the task from the task control block. The application includes at least one task. For a specific implementation of the loading unit 1103, refer to step S503 in FIG. 5. Details are not described herein again. In a product implementation process, the loading unit 1103 may be the loader 132 shown in FIG. 2, or may be another loader. A form of the loading unit 1103 is not limited in this embodiment.

Optionally, the scheduling unit 1102 is further configured to allocate the task to the target processor for execution.

Optionally, the scheduling unit 1102 is further configured to: when the target processor supports simultaneous multithreading processing, allocate the task to one processing unit of the target processor for execution. The target processor includes at least two processing units.

Optionally, the scheduling unit 1102 is further configured to: when the target processor does not support simultaneous multithreading processing, allocate the task to one processor core of the target processor. The target processor includes at least one processor core.

Optionally, the loading unit 1103 is further configured to: when the target processor fails to execute the task, store an identifier of the target scheduling domain in a first storage unit of the task control block of the task, where the identifier stored in the first storage unit indicates that the processor included in the target scheduling domain is not allocated to execute the application. For a specific implementation, refer to step S803 in FIG. 8. Details are not described herein again.

Optionally, the loading unit 1103 is further configured to: when the target processor successfully executes the task, store the identifier of the target scheduling domain in a second storage unit of the task control block of the task, where the identifier stored in the second storage unit indicates that the processor included in the target scheduling domain can be allocated to execute the application. For a specific implementation, refer to step S903 in FIG. 9. Details are not described herein again.

Optionally, the task is a process or a thread generated by the application.

Optionally, the obtaining unit 1101 further includes a compilation unit 1104 and a parsing unit 1105. When the application is compilable, the compilation unit 1104 is configured to obtain the type of the instruction set of the application by using a compilation option. For a specific implementation, refer to steps S501 and S502 in FIG. 5. Details are not described herein again. When the application is not compilable, the parsing unit 1105 is configured to obtain the type of the instruction set of the application by using an abnormal instruction. For a specific implementation, refer to step S702 in FIG. 7. Details are not described herein again. In a product implementation process, the compilation unit 1104 may be the compiler 131 shown in FIG. 2, or may be another compiler. A form of the compilation unit 1104 is not limited in this embodiment. The parsing unit 1105 may be the parser 134 shown in FIG. 2, or may be another parser. A form of the parsing unit 1105 is not limited in this embodiment.

In conclusion, the scheduling apparatus 1100 provided in this embodiment of this application can identify an instruction set in a task of an application, and schedule the task to a processing unit that can execute the instruction set, to improve a probability of successful execution of the application.

This application further provides a scheduling system, including a scheduling apparatus configured to perform the scheduling method provided in this application and a plurality of processors, where a type of at least one instruction set of instruction sets supported by at least one of the plurality of processors is different from a type of an instruction set of instruction sets supported by another processor.

Optionally, the scheduling apparatus and the plurality of processors may be located on different computing devices.

Optionally, the at least one of the plurality of processors and the another processor may be located on different computing devices.

All or some of the foregoing embodiments may be implemented by software, hardware, firmware, or any combination thereof. When software is used to implement embodiments, all or some of the foregoing embodiments may be implemented in a form of a computer program product. The computer program product includes one or more computer instructions. When the computer program instructions are loaded or executed on a computer, all or some of the procedures or the functions according to embodiments of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid-state drive, SSD).

The foregoing descriptions are merely specific implementations of this application. Any variation or replacement readily figured out by a person skilled in the art based on the specific implementations provided in this application shall fall within the protection scope of this application.

## Claims

1. A scheduling method, wherein the method is performed by a computing device, the computing device comprises a plurality of processors, a type of at least one instruction set of instruction sets supported by at least one of the plurality of processors is different from a type of an instruction set of instruction sets supported by another processor, and the method comprises:
obtaining a type of an instruction set of an application;
selecting a target processor from the plurality of processors, wherein the type of the instruction set of the application is a subset of types of a plurality of instruction sets of instruction sets supported by the target processor; and
allocating the application to the target processor for execution.

2. The method according to claim 1, wherein the selecting a target processor from the plurality of processors specifically comprises:
selecting the target processor from the plurality of processors based on the type of the instruction set of the application.

3. The method according to claim 1 or 2, wherein the target processor belongs to a target scheduling domain, instruction sets supported by the target scheduling domain is the same as the instruction sets supported by the target processor, and before the selecting a target processor, the method further comprises:
selecting the target scheduling domain from a plurality of scheduling domains, wherein the type of the instruction set of the application is a subset of types of a plurality of instruction sets in the instruction sets supported by the target scheduling domain.

4. The method according to claim 3, wherein
the target scheduling domain comprises only the target processor; or the target scheduling domain comprises the target processor and another processor, and instruction sets supported by the another processor is the same as the instruction sets supported by the target processor.

5. The method according to any one of claims 1 to 4, wherein the application comprises at least one task, and the method further comprises:
writing a type of an instruction set of the task into a task control block of the task, wherein the type of the instruction set of the task is the same as the type of the instruction set of the application; and
the obtaining a type of an instruction set of an application specifically comprises: obtaining the type of the instruction set of the task from the task control block.

6. The method according to claim 5, wherein the allocating the application to the target processor for execution specifically comprises:
allocating the task to the target processor for execution.

7. The method according to claim 6, wherein the target processor comprises at least two processing units, and the allocating the task to the target processor for execution specifically comprises:
when the target processor supports simultaneous multithreading processing, allocating the task to one processing unit of the target processor for execution.

8. The method according to claim 6, wherein the target processor comprises at least one processor core, and the allocating the task to the target processor for execution specifically comprises:
when the target processor does not support simultaneous multithreading processing, allocating the task to one processor core of the target processor.

9. The method according to any one of claims 6 to 8, wherein the target processor belongs to the target scheduling domain, the instruction sets supported by the target scheduling domain is the same as the instruction sets supported by the target processor, and the method further comprises:
when the target processor fails to execute the task, storing an identifier of the target scheduling domain in a first storage unit of the task control block of the task, wherein the identifier stored in the first storage unit indicates that the processor comprised in the target scheduling domain is not allocated to execute the application.

10. The method according to any one of claims 6 to 9, wherein the target processor belongs to the target scheduling domain, the instruction sets supported by the target scheduling domain is the same as the instruction sets supported by the target processor, and the method further comprises:
when the target processor successfully executes the task, storing the identifier of the target scheduling domain in a second storage unit of the task control block of the task, wherein the identifier stored in the second storage unit indicates that the processor comprised in the target scheduling domain can be allocated to execute the application.

11. The method according to any one of claims 4 to 10, wherein the task is a process or a thread generated by the application.

12. The method according to any one of claims 1 to 11, wherein the obtaining a type of an instruction set of a to-be-executed application specifically comprises:
when the application is compilable, obtaining the type of the instruction set of the application by using a compilation option; or
when the application is not compilable, obtaining the type of the instruction set of the application by using an abnormal instruction.

13. A computing device, wherein the computing device comprises a plurality of processors, a type of at least one instruction set of instruction sets supported by at least one of the plurality of processors is different from a type of an instruction set of instruction sets supported by another processor, wherein
a main processor in the plurality of processors is configured to:
obtain a type of an instruction set of an application;
select a target processor from the plurality of processors, wherein the type of the instruction set of the application is a subset of types of a plurality of instruction sets of instruction sets supported by the target processor; and
allocate the application to the target processor for execution.

14. The computing device according to claim 13, wherein the main processor is further configured to:
select the target processor from the plurality of processors based on the type of the instruction set of the application.

15. The computing device according to claim 13 or 14, wherein the target processor belongs to a target scheduling domain, instruction sets supported by the target scheduling domain is the same as the instruction sets supported by the target processor, and before the selecting a target processor, the main processor is further configured to:
select the target scheduling domain from a plurality of scheduling domains, wherein the type of the instruction set of the application is a subset of types of a plurality of instruction sets in the instruction sets supported by the target scheduling domain.

16. The computing device according to claim 15, wherein
the target scheduling domain comprises only the target processor; or the target scheduling domain comprises the target processor and another processor, and instruction sets supported by the another processor is the same as the instruction sets supported by the target processor.

17. The computing device according to any one of claims 13 to 16, wherein the application comprises at least one task, and the main processor is further configured to:
write a type of an instruction set of the task into a task control block of the task, wherein the type of the instruction set of the task is the same as the type of the instruction set of the application; and
obtain the type of the instruction set of the task from the task control block.

18. The computing device according to claim 17, wherein the main processor is further configured to:
allocate the task to the target processor for execution.

19. The computing device according to claim 18, wherein the target processor comprises at least two processing units, and the main processor is further configured to:
when the target processor supports simultaneous multithreading processing, allocate the task to one processing unit of the target processor for execution.

20. The computing device according to claim 18, wherein the target processor comprises at least one processor core, and the main processor is further configured to:
when the target processor does not support simultaneous multithreading processing, allocate the task to one processor core of the target processor.

21. The computing device according to any one of claims 18 to 20, wherein the target processor belongs to the target scheduling domain, the instruction sets supported by the target scheduling domain is the same as the instruction sets supported by the target processor, and the main processor is further configured to:
when the processor fails to execute the task, store an identifier of the target scheduling domain in a first storage unit of the task control block of the task, wherein the identifier stored in the first storage unit indicates that the processor comprised in the target scheduling domain is not allocated to execute the application.

22. The computing device according to any one of claims 18 to 21, wherein the target processor belongs to the target scheduling domain, the instruction sets supported by the target scheduling domain is the same as the instruction sets supported by the target processor, and the main processor is further configured to:
when the processor successfully executes the task, store the identifier of the target scheduling domain in a second storage unit of the task control block of the task, wherein the identifier stored in the second storage unit indicates that the processor comprised in the target scheduling domain can be allocated to execute the application.

23. The computing device according to any one of claims 15 to 22, wherein the task is a process or a thread generated by the application.

24. The computing device according to any one of claims 13 to 23, wherein the main processor is further configured to:
when the application is compilable, obtain the type of the instruction set of the application by using a compilation option; or
when the application is not compilable, obtain the type of the instruction set of the application by using an abnormal instruction.

25. A scheduling apparatus, comprising an obtaining unit and a scheduling unit, wherein
the obtaining unit is configured to obtain a type of an instruction set of an application; and
the scheduling unit is configured to select a target processor from a plurality of processors of a computing device, wherein a type of at least one instruction set of instruction sets supported by at least one of the plurality of processors is different from a type of an instruction set of instruction sets supported by another processor, and the type of the instruction set of the application is a subset of types of a plurality of instruction sets of instruction sets supported by the target processor; and allocate the application to the target processor for execution.

26. The scheduling apparatus according to claim 25, wherein the scheduling unit is further configured to:
select the target processor from the plurality of processors based on the type of the instruction set of the application.

27. The scheduling apparatus according to claim 25 or 26, wherein the target processor belongs to a target scheduling domain, instruction sets supported by the target scheduling domain is the same as the instruction sets supported by the target processor, and before the selecting a target processor, the scheduling unit is further configured to:
select the target scheduling domain from a plurality of scheduling domains, wherein the type of the instruction set of the application is a subset of types of a plurality of instruction sets in the instruction sets supported by the target scheduling domain.

28. The scheduling apparatus according to claim 27, wherein the target scheduling domain comprises only the target processor; or the target scheduling domain comprises the target processor and another processor, and instruction sets supported by the another processor is the same as the instruction sets supported by the target processor.

29. The scheduling apparatus according to any one of claims 25 to 28, wherein the application comprises at least one task, the scheduling apparatus further comprises a loading unit, and the loading unit is configured to:
write a type of an instruction set of the task into a task control block of the task, wherein the type of the instruction set of the task is the same as the type of the instruction set of the application; and
the obtaining unit is further configured to obtain the type of the instruction set of the task from the task control block.

30. The scheduling apparatus according to claim 29, wherein the scheduling unit is further configured to:
allocate the task to the target processor for execution.

31. The scheduling apparatus according to claim 30, wherein the target processor comprises at least two processing units, and the scheduling unit is further configured to:
when the target processor supports simultaneous multithreading processing, allocate the task to one processing unit of the target processor for execution.

32. The scheduling apparatus according to claim 30, wherein the target processor comprises at least one processor core, and the scheduling unit is further configured to:
when the target processor does not support simultaneous multithreading processing, allocate the task to one processor core of the target processor.

33. The scheduling apparatus according to any one of claims 30 to 32, wherein the target processor belongs to the target scheduling domain, the instruction sets supported by the target scheduling domain is the same as the instruction sets supported by the target processor, and the loading unit is further configured to:
when the target processor fails to execute the task, store an identifier of the target scheduling domain in a first storage unit of the task control block of the task, wherein the identifier stored in the first storage unit indicates that the processor comprised in the target scheduling domain cannot be allocated to execute the application.

34. The scheduling apparatus according to any one of claims 30 to 33, wherein the target processor belongs to the target scheduling domain, the instruction sets supported by the target scheduling domain is the same as the instruction sets supported by the target processor, and the loading unit is further configured to:
when the target processor successfully executes the task, store the identifier of the target scheduling domain in a second storage unit of the task control block of the task, wherein the identifier stored in the second storage unit indicates that the processor comprised in the target scheduling domain can be allocated to execute the application.

35. The scheduling apparatus according to any one of claims 29 to 34, wherein the task is a process or a thread generated by the application.

36. The scheduling apparatus according to any one of claims 25 to 35, wherein the obtaining unit comprises a compilation unit and a parsing unit, wherein
when the application is compilable, the compilation unit is configured to obtain the type of the instruction set of the application by using a compilation option; or
when the application is not compilable, the parsing unit is configured to obtain the type of the instruction set of the application by using an abnormal instruction.

37. A scheduling system, wherein the scheduling system comprises the scheduling apparatus according to any one of claims 25 to 36 and a plurality of processors, and a type of at least one instruction set of instruction sets supported by at least one of the plurality of processors is different from a type of an instruction set of instruction sets supported by another processor.

38. The scheduling system according to claim 37, wherein the scheduling apparatus and the plurality of processors are located on different devices.

39. The scheduling system according to claim 37 or 38, wherein the at least one of the plurality of processors and the another processor are located on different devices.

40. A computer-readable storage medium, wherein the computer-readable storage medium stores instructions; and when the instructions are run on a computer, the computer is enabled to perform the operation steps of the method according to any one of claims 1 to 12.
